# EUROPEAN PATENT SPECIFICATION

(11) **EP 0 954 185 B1**
(45) Date of publication and mention of the grant of the patent: **14.03.2007**
(21) Application number: 98201609.9
(22) Date of filing: 18.05.1998
(51) Int. Cl.: H04N 9/79

(54) **Video tape recorder of PAL system**
PAL-System Videobandaufnehmer
Dispositif d'enregistrement à bande pour système PAL

(30) Priority: 27.04.1998 JP 11655198
(43) Date of publication of application: 03.11.1999
(73) Proprietor: MATSUSHITA ELECTRIC INDUSTRIAL CO., LTD., Kadoma-shi, Osaka 571-8501 (JP)
(72) Inventor: Uchiyama, Shin-ichi, Hirakata-shi, Osaka 573-0092 (JP); Mimura, Norihisa, Osaka, 576-0001 (JP); Heinemann, Herbert, 5656 AA Eindhoven (NL); Ernst, Holger, 5656 AA Eindhoven (NL)
(74) Representative: Eisenführ, Speiser & Partner

(56) References cited:
- EP-A- 0 540 034
- US-A- 3 917 415
- US-A- 4 217 603
- PATENT ABSTRACTS OF JAPAN vol. 1997, no. 10, 31 October 1997 (1997-10-31) -& JP 09 154153 A (MATSUSHITA ELECTRIC IND CO LTD), 10 June 1997 (1997-06-10)
- PATENT ABSTRACTS OF JAPAN vol. 018, no. 113 (E-1541), 23 February 1994 (1994-02-23) -& JP 05 308661 A (MITSUBISHI ELECTRIC CORP), 19 November 1993 (1993-11-19)

## Description

### BACKGROUND OF THE INVENTION

### 1. FIELD OF THE INVENTION

The present invention relates to a video tape recorder (referred to as a VTR hereinafter) of the PAL system, in particular, to a VTR provided with a converter circuit which has circuits of a recording mode and a reproducing mode as well as a circuit of a stop mode and converts a composite video signal of NTSC system into a composite video signal of the PAL system.

### 2. DESCRIPTION OF THE PRIOR ART

In recent years, a VTR video signal processing apparatus of the PAL system is provided with a function for not only recording and reproducing a video signal of the PAL system but also converting a video signal of NTSC system into a video signal of the PAL system upon recording the video signal of NTSC system and reproducing a video tape recorded in conformity to NTSC system.

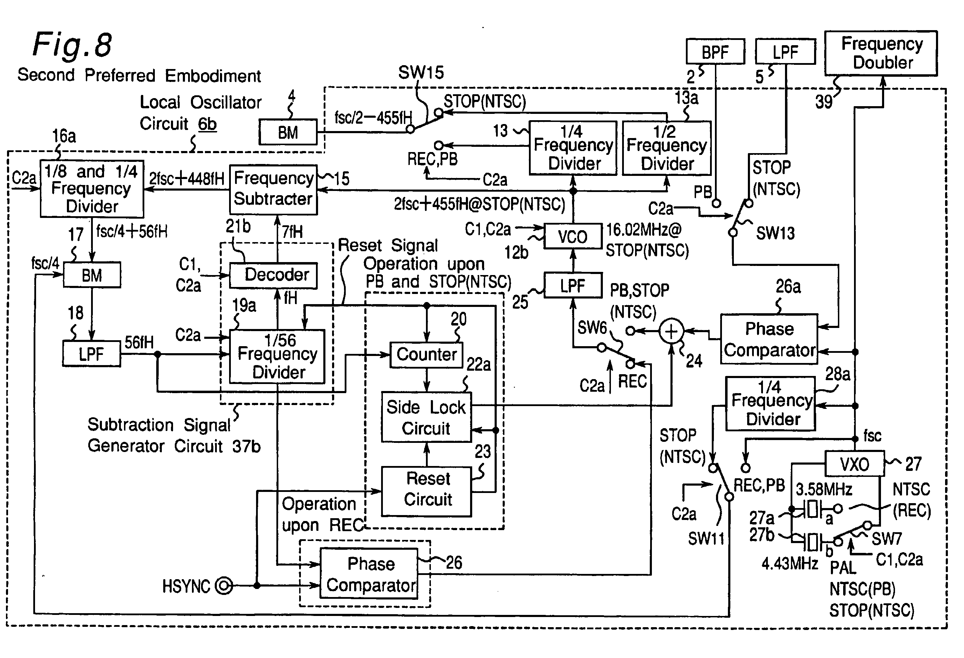

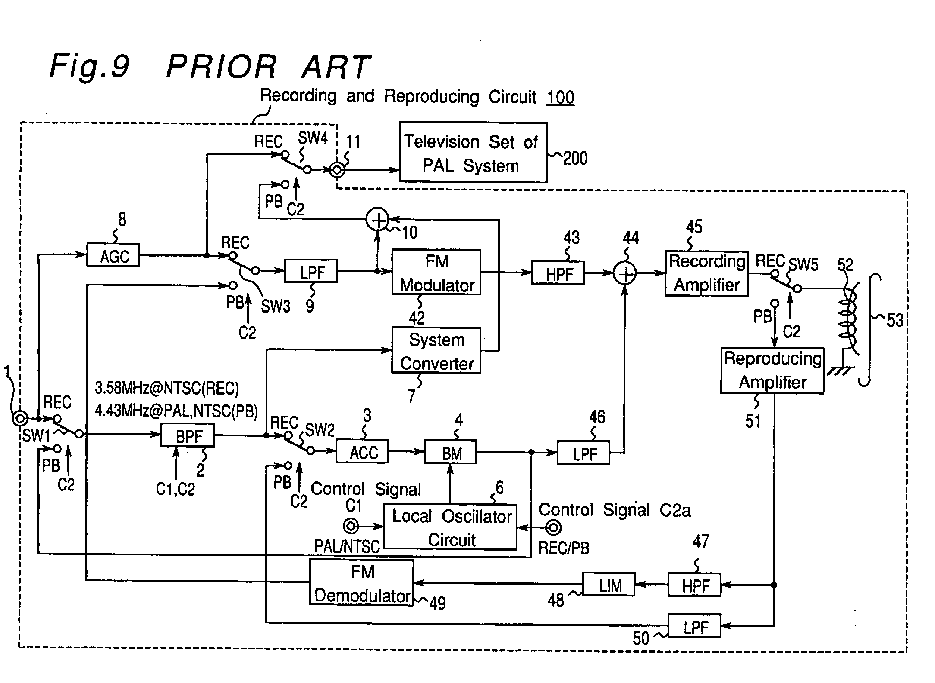

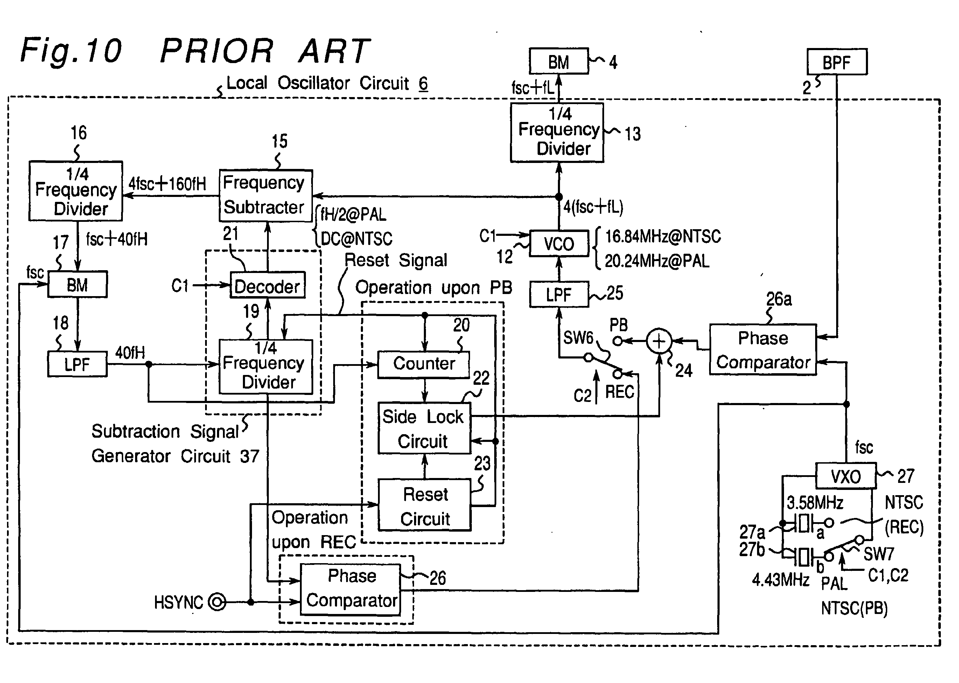

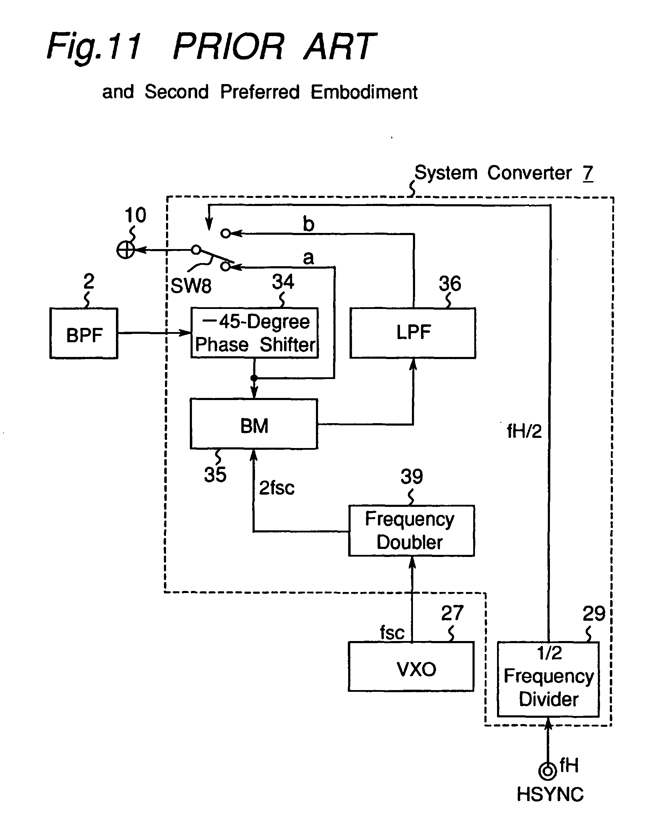

Fig. 9 is a block diagram showing a construction of a recording and reproducing circuit 100 for a prior art VTR of the PAL system, Fig. 10 is a block diagram showing a construction of a local oscillator circuit 6 shown in Fig. 9, and Fig. 11 is a block diagram showing a construction of a system converter 7 shown in Fig. 9. It is to be noted that a circuit identical to that of the system converter 7 shown in Fig. 11 is used in the second preferred embodiment shown in Fig. 8.

In Fig. 9 are shown an input terminal 1 of an inputted composite video signal, a band-pass filter (referred to as a BPF hereinafter) 2 which removes a luminance signal from the inputted composite video signal and extracts a chrominance sub-carrier signal through band-pass filtering, an automatic gain control circuit (referred to as an ACC hereinafter) 3 which makes the amplitude of the chrominance sub-carrier signal constant and then outputs the resulting signal, a balanced modulator (referred to as a BM hereinafter) 4 which frequency-converts the inputted chrominance sub-carrier signal into a down frequency-converted chrominance signal by means of a local oscillation signal generated by a local oscillator circuit 6, which generates the local oscillation signal for the BM 4, a system converter 7 which converts the chrominance sub-carrier signal of NTSC system into a chrominance sub-carrier signal of the PAL system, an automatic gain control circuit (referred to as an AGC hereinafter) 8 which makes constant the amplitude of the inputted composite video signal, a low-pass filter (referred to as an LPF hereinafter) 9 which removes the chrominance sub-carrier signal from the inputted composite video signal and extracts a luminance signal through low-pass filtering, an adder 10, an output terminal 11 for a television set 200 of the PAL system, an FM modulator 42, a high-pass filter (referred to as an HPF hereinafter) 43, an adder 44, a recording amplifier 45, an LPF 46, a reproducing amplifier 51, a magnetic head 52, a magnetic tape 53, an HPF 47, a limiter (referred to as an LIM hereinafter) 48, an FM demodulator 49 and an LPF 50. There are further shown switches SW1 through SW5.

In Fig. 10 are shown a voltage controlled type oscillator (referred to as a. VCQ hereinafter) 12, a 1/4 frequency divider 13, a frequency subtracter 15, a 1/4 frequency divider 16, a BM 17, an LPF 18, a 1/40 frequency divider 19, a counter 20, a decoder 21, a side lock circuit 22, a reset circuit 23, an adder 24, an LPF 25, phase comparators 26 and 26a, a voltage controlled type variable crystal oscillator 27, an oscillation crystal 27a having an oscillation frequency of 3.58 MHz, and an oscillation crystal 27b having an oscillation frequency of 4.43 MHz. There is also shown a switch SW6.

In Fig. 11 are shown a 1/2 frequency divider 29, a -45-degree phase shifter 34, a BM 35, an LPF 36 and a frequency doubler 39. There is also shown a switch SW8.

Referring to Figs. 9 and 10, the switches SW1 through SW6 are selectively switched over to a REC side or to a PB side according to a control signal C2 representing either a recording mode (REC) or a reproducing mode (PB). When the VTR is in a stopped state, it is set to the recording mode. In Fig. 9, the BPF 2 is a BPF whose center frequency can be set so as to be selectively switched over to the center frequency of the pass-band of 3.58 MHz or to the center frequency of the pass-band of 4.43 MHz. According to a control signal C1 representing either the PAL system or NTSC system and the control signal C2, the center frequency of its pass-band is set to 4.43 MHz in the case of the reproducing mode (PB) of the PAL system and NTSC system, and the center frequency of its pass-band is set to 3.58 MHz in the case of the recording mode (REC) of NTSC system.

Referring to Fig. 10, a switch SW7 is switched over according to the control signals C1 and C2. The switch SW7 is switched over to its b-side so as to connect the oscillation crystal 27b having the oscillation frequency of 4.43 MHz to the VXO 27 in the case of the reproducing mode (PB) of the PAL system and NTSC system, and the switch SW7 is switched over to its a-side so as to connect the oscillation crystal 27a having the oscillation frequency of 3.58 MHz to the VXO 27 in the case of the recording mode (REC) of NTSC system. The decoder 21 has its operation switched according to the control signal C1 and operates to divide the frequency of the signal having a frequency fH from the 1/40 frequency divider 19 by two, and then output the resulting frequency-divided signal to the frequency subtracter 15 in the case of the PAL system. The decoder 21 is reset to output a direct current signal DC to the frequency subtracter 15 in the case of NTSC system. The center frequency of the oscillation frequency of the VCO 12 is selectively switched over according to the control signal C1. The center frequency of the oscillation frequency is set to 16.84 MHz in the case of NTSC system, and the center frequency of the oscillation frequency is set to 20.24 MHz in the case of the PAL system.

Referring to Fig. 11, the switch SW8 is repetitively switched over selectively to the a-side or the b-side according to the signal level of a rectangular waveform signal obtained by dividing the frequency of a horizontal synchronizing signal HSYNC by two by means of the 1/2 frequency divider 29.

The construction and operation of the prior art recording and reproducing circuit 100 in the recording mode and a stop mode will be, first of all, described. In this case, the stop mode is in such a state in which the power of the VTR of the PAL system is turned on and neither recording nor reproducing is executed. In Fig. 9, a composite video signal is inputted from the input terminal 1 via the REC side of the switch SW1, and the BPF 2 removes the luminance signal from the inputted composite video signal, band-pass- filters the chrominance sub-carrier signal, and then, outputs the resulting chrominance sub-carrier signal to the system converter 7 and to the ACC 3 via the REC side of the switch SW2. The ACC 3 makes the amplitude of the inputted chrominance sub-carrier signal constant, and outputs the resulting signal to the BM 4. Then, the BM 4 frequency-converts the inputted chrominance sub-carrier signal into a down frequency-converted chrominance signal by executing balanced modulation for the signal by means of a local oscillation signal generated by the local oscillator circuit 6, and thereafter, outputs the resulting frequency-converted signal to the adder 44 via the LPF 46 which removes unnecessary components generated in the frequency conversion stage. In this case, the BM 4 and the LPF 46 constitute a frequency converter section for frequency-converting the chrominance sub-carrier signal into the down frequency-converted chrominance signal.

On the other hand, the AGC 8 makes the amplitude of the composite video signal inputted via the input terminal 1 constant, and thereafter, outputs the composite video signal to the television set 200 of the PAL system via the REC side of the switch SW4 and the output terminal 11 and to the LPF 9 via the REC side of the switch SW3. The LPF 9 removes the chrominance sub-carrier signal from the inputted composite video signal to low-pass-filter the luminance signal, and then, outputs the resulting luminance signal to the FM modulator 42. The FM modulator 42 frequency modulates a predetermined carrier wave signal according to the inputted luminance signal, and then, outputs the frequency-modulated luminance signal obtained through the frequency modulation to the adder 44 via the HPF 43 which removes the unnecessary frequency components. The adder 44 adds the down frequency-converted chrominance signal from the LPF 46 to the frequency-modulated luminance signal from the HPF 43, and then, outputs the recording signal of the result of addition to the magnetic head 52 via the recording amplifier 45 and the REC side of the switch SW5. By this operation, the recording signal is recorded on the magnetic tape 53 by the magnetic head 52.

The VCO 12 shown in Fig. 10 serves to oscillate so that (a) a frequency 4(fsc + fL) that is four times as great as a sum of a sub-carrier frequency fsc of the chrominance sub-carrier signal and (b) a sub-carrier frequency fL of the down frequency-converted chrominance signal are within a variable oscillation frequency range of the VCO 12, and the VCO 12 is controlled so as to oscillates at the frequency 4(fsc + fL) according to a control voltage signal from the LPF 25. In this case, the sub-carrier frequency fL of the down frequency-converted chrominance signal is a frequency that is (40 + 1/8) times as great as a horizontal scanning frequency fH in the PAL system and a frequency that is 40 times as great as the horizontal scanning frequency fH in NTSC system. Therefore, the oscillation frequency of the VCO 12 becomes 4fsc + (160 + 1/2)fH in the PAL system and becomes 4fsc + (160fH) in NTSC system. Then, in the PAL system, the frequency subtracter 15 converts the frequency of the aforementioned oscillation signal so that a frequency fH/2 of the signal from the decoder 21 is subtracted from the oscillation frequency of the oscillation signal of the VCO 12. Therefore, the frequency of an output signal from the frequency subtracter 15 becomes 4fsc + 160fH. On the other hand, in NTSC system, the direct current signal DC is inputted from the decoder 21 to the frequency subtracter 15. Consequently, no frequency subtraction processing is executed in the frequency subtracter 15, and the frequency of the output signal from the frequency subtracter 15 becomes 4fsc + 160fH. The 1/4 frequency divider 16 divides the frequency of the output signal from the frequency subtracter 15 by four, and then, outputs a signal having a frequency (fsc + 40fH) to the BM 17.

On the other hand, the VXO 27 is a voltage controlled type variable crystal oscillator which oscillates at the sub-carrier frequency fsc of the chrominance sub-carrier signal, and an oscillation signal generated by the VXO 27 is outputted to the BM 17 and the phase comparator 26a. The BM 17 executes balanced modulation for the output signal from the 1/4 frequency divider 16 and the output signal from the VXO 27, and then passes the signal obtained after the balanced modulation through the LPF 18, so that a signal having a frequency 40fH is extracted. Thereafter, the extracted signals is outputted to the 1/40 frequency divider 19 and the counter 20. The 1/40 frequency divider 19 divides the frequency of the signal of the frequency 40fH from the LPF 18 by forty, and then, outputs the signal of the frequency fH obtained after the frequency division to the decoder 21 and the phase comparator 26. The decoder 21 divides the frequency of the frequency division signal from the 1/40 frequency divider 19 in the PAL system by two, and then, outputs the frequency 1/2fH obtained after the frequency division to the frequency subtracter 15. The phase comparator 26 compares the phase of the inputted horizontal synchronizing signal with that of the signal having the frequency fH from the 1/40 frequency divider 19, and then, outputs a phase error signal obtained as a result of the phase comparison to the VCO 12 via the REC side of the switch SW6 and the LPF 25 for smoothing the signal. By this operation, the oscillation frequency of the VCO 12 is controlled so as to becomes 4fsc + 4fL according to the above phase error signal. Further, the 1/4 frequency divider 13 divides the frequency of the oscillation signal from the VCO 12 by four, and then, outputs a signal of a frequency (fsc + fL) obtained after the frequency division to the BM 4 shown in Fig. 9. That is, the local oscillator circuit 6 outputs to the BM 4 the signal of the frequency (fsc + fL) as a local oscillation signal for frequency conversion in the BM 4.

The construction and operation of the recording and reproducing circuit 100 shown in Fig. 9 in the reproducing mode will be described hereinafter.

Referring to Fig. 9, a recording signal recorded on the magnetic tape 53 is reproduced by the magnetic head 52, and the reproduced recording signal (referred to as a reproduction signal hereinafter) is inputted to the HPF 47 and the LPF 50 via the PB side of the switch SW5 and the reproducing amplifier 51. The HPF 47 extracts the frequency-modulated luminance signal from this reproduction signal through high-pass filtering, and thereafter, outputs the resulting frequency-modulated luminance signal to the FM demodulator 49 via the LIM 48 which limits the amplitude of the signal constant. Then, the FM demodulator 49 demodulates the inputted frequency-modulated luminance signal so as to generate the luminance signal, and then, outputs the luminance signal obtained after the demodulation to the adder 10 via the PB side of the switch SW3 and the LPF 9 for removing the unnecessary frequency components of the signal. On the other hand, the LPF 50 extracts the down frequency-converted chrominance signal from the reproduction signal from the reproducing amplifier 51 through low-pass filtering, and then, outputs the down frequency-converted chrominance signal to the BM 4 via the PB side of the switch SW2 and the ACC 3 which controls the signal amplitude constant. The BM 4 frequency-converts the inputted down frequency-converted chrominance signal into a chrominance sub-carrier signal in a high frequency region of 3.58 MHz (in the case of NTSC system) or 4.43 MHz (in the case of the PAL system) by means of the local oscillation signal from the local oscillator circuit 6, and thereafter, outputs the chrominance sub-carrier signal to the system converter 7 via the PB side of the switch SW1 and the BPF 2 which removes the unnecessary frequency components.

In the case of the reproduction signal of the PAL system, the chrominance sub-carrier signal from the BPF 2 is inputted as it is to the adder 10 without being processed by the system converter 7. In the case of the reproduction signal of the NTSC system, by setting the sub-carrier frequency of the chrominance sub-carrier signal to 4.43 MHz of the PAL system in the frequency-converting process in the BM 4, the sub-carrier frequency of the chrominance sub-carrier signal is converted into a chrominance sub-carrier signal of NTSC system with the frequency of 4.43 MHz of the PAL system.

Referring to Fig. 11, the -45-degree phase shifter 34 shifts the phase of a color burst signal of the chrominance sub-carrier signal from the BPF 2 by -45 degrees, and thereafter, outputs the phase-shifted signal to the a-side of the switch SW8 and the BM 35. On the other hand, the sub-carrier frequency fsc of the chrominance sub-carrier signal generated by the VXO 27 is doubled by the frequency doubler 39, and the resulting frequency-doubled signal of a frequency 2fsc is inputted to the BM 35. The BM 35 executes balanced modulation for the signal from the -45-degree phase shifter 34 and the signal of the frequency 2fsc from the frequency doubler 39 so as to invert the phase of an (R-Y) axis signal of the NTSC signal, and thereafter, outputs the signal obtained through the phase inversion to the b-side of the switch SW8 via the LPF 36 which removes the unnecessary frequency components. On the other hand, the 1/2 frequency divider 29 divides the frequency of the inputted horizontal synchronizing signal by two, and then, outputs a switching signal having a half frequency of the horizontal scanning frequency fH to a switching control terminal of the switch SW8. Therefore, the switch SW8 is repetitively switched over selectively to the a-side or the b-side according to the signal level of a switching rectangular waveform signal having the half frequency of the horizontal scanning frequency fH. By this operation, the signal from the -45-degree phase shifter 34 and the signal from the LPF 36 are alternately selected every cycle of the inverse of the frequency fH/2 by the switch SW8 to be supplied from the switch SW8 to the adder 10.

That is, the system converter 7 shown in Fig. 11 converts the chrominance sub-carrier signal of NTSC system whose sub-carrier frequency is 4.43 MHz of the PAL system into the chrominance sub-carrier signal of the PAL system, and then, outputs the resulting chrominance sub-carrier signal to the adder 10. Referring to Fig. 9, by adding the luminance signal from the LPF 9 to the chrominance sub-carrier signal from the system converter 7, the adder 10 obtains a composite video signal of the result of addition. The composite video signal of the reproduction signal is inputted to the television set 200 of the PAL system via the PB side of the switch SW4 and the output terminal 11, so that the picture of the composite video signal of the reproduction signal is made visible by means of the television set 200 of the PAL system.

Referring to Fig. 10, the phase comparator 26a compares the phase of the color burst signal of the chrominance sub-carrier signal from the BPF 2 with that of the oscillation signal having the sub-carrier frequency fsc from the VXO 27, and then, outputs a phase error signal of the result of phase comparison to the VCO 12 via the LPF 25 for smoothing the signal. In response to this, the operation of the VCO 12 is controlled so that its oscillation frequency becomes (4fsc + 4fL), and the frequency of the oscillation signal from the VCO 12 is divided by four by the 1/4 frequency divider 13. Thereafter, the signal obtained through the frequency division becomes a signal having a frequency (fsc + fL) that is a local oscillation signal for frequency conversion in the BM 4. Further, when reproducing the recording signal of the PAL system in the frequency subtracter 15, as described above, the frequency fH/2 is subtracted from the oscillation frequency (4fsc + 4fL) of the oscillation signal of the VCO 12. When reproducing the recording signal of NTSC system, by subtracting the frequency 0 of the direct current signal from the oscillation frequency (4fsc + 4fL) of the oscillation signal of the VCO 12, the frequency of the output signal from the frequency subtracter 15 becomes 4fsc + 160fH. Then, the 1/4 frequency divider 16 divides the frequency of the output signal from the frequency subtracter 15 by four to output a signal having a frequency (fsc + 40fH) to the BM 17, and the BM 17 executes balanced modulation for the signal having the above frequency (fsc + 40fH) and the oscillation signal from the VXO 27, and then, outputs the resulting balanced-modulated signal to the LPF 18. The LPF 18 low-pass- filters the output signal from the BM 17 so as to extract the signal having the frequency 40fH in a lower frequency region, and then, outputs the resulting extracted signal to the 1/40 frequency divider 19 and the counter 20.

The 1/40 frequency divider 19 divides the frequency of the inputted signal having the frequency 40fH by forty, and then, outputs the signal having the frequency fH obtained after the frequency division to the decoder 21 and the phase comparator 26. Subsequently, the decoder 21 divides the frequency of the signal having the frequency fH from the 1/40 frequency divider 19 to generate a signal having a frequency fH/2, and then, outputs the resulting signal to the frequency subtracter 15. The frequency subtracter 15 operates so as to subtract only the frequency fH/2 from the frequency of the oscillation signal obtained from the VCO 12 by means of the signal having the frequency fH/2 from the decoder 21. On the other hand, the horizontal synchronizing signal HSYNC is inputted to the reset circuit 23. The reset circuit 23 outputs a reset signal in synchronization with the horizontal synchronizing signal every eight horizontal scanning intervals (one horizontal scanning interval is referred to as a 1H hereinafter) when reproducing the signal of NTSC system, and then, outputs the reset signal in synchronization with the horizontal synchronizing signal every 16H when reproducing the signal of the PAL system, to reset the 1/40 frequency divider 19, the counter 20 and the side lock circuit 22 into their initial states.

The counter 20 counts as a clock the signal having the frequency 40fH from the LPF 18 during the interval of 8H when reproducing the signal of NTSC system, and counts as a clock the signal having the frequency 40fH from the LPF 18 during the interval of 16H when reproducing the signal of the PAL system. In this case, the count value of the counter 20 is outputted to the side lock circuit 22. Therefore, the side lock circuit 22 detects the count value for an interval of 8H or 16H of the counter 20.

In this case, when reproducing the signal of NTSC system, a control signal for increasing the oscillation frequency of the VCO 12 when the count value is smaller than 318 is outputted to the VCO 12 via the adder 24, the PB side of the switch SW6 and the LPF 25, while a control signal for decreasing the oscillation frequency of the VCO 12 when the count value is not smaller than 322 is outputted. An output control signal from the side lock circuit 22 is outputted to the VCO 12 via the adder 24, the switch SW6 and the LPF 25, and therefore, the oscillation frequency of the VCO 12 is controlled so that the frequency of the output signal from the LPF 18 falls within a range of (40 - 1/4)fH to (40 + 1/4)fH.

On the other hand, when reproducing the signal of the PAL system, the side lock circuit 22 outputs the control signal for increasing the oscillation frequency of the VCO 12 when the count value of the counter 20 is smaller than 638, while the side lock circuit 22 outputs the control signal for decreasing the oscillation frequency of the VCO 12 when the count value of the counter 20 is not smaller than 642. By this operation, the frequency of the output signal from the LPF 18 is controlled so as to fall within a range of (40 - 1/8)fH to (40 + 1/8)fH. The oscillation frequency of the VCO 12 is controlled by the phase comparator 26 within a frequency range under the control of the side lock circuit 22, and therefore, the oscillation frequency of the VCO 12 is controlled so as to be set to the oscillation frequency 4(fsc + fL). In this stage, the local oscillator circuit 6 can supply a signal having a frequency (fs + fL) to the BM 4.

In the aforementioned prior art recording and reproducing circuit 100, when reproducing the recording signal recorded in a form of the signal of NTSC system, the signal is outputted after being converted into the chrominance sub-carrier signal of the PAL system. Therefore, the color signal can be displayed on the television set 200 of the PAL system. However, when the signal of NTSC system is inputted as an input signal in the recording and stop modes, the composite video signal of NTSC system is outputted as it is to the television set 200 of the PAL system, and this leads to such a problem that the color signal cannot be displayed on the screen of the television set 200 of the PAL system.

JP 09-154 153A discloses a video signal processing unit by which a color signal is reproduced in a television receiver of the PAL system in the case of reception of an NTSC system composite video signal when a video tape recorder of the PAL system is stopped. Said video signal processing unit comprises a converter including a band-pass filter, a low-pass filter, an oscillator, a balanced modulator for frequency conversion, a system converter and an adder.

JP 05-308 661A discloses a chrominance signal processor for reducing the circuit scale of a counter by converting the frequency of the output of a voltage control oscillator by a reference frequency to reduce the frequency.

### SUMMARY OF THE INVENTION

An essential object of the present invention is therefore to provide a VTR of the PAL system, capable of displaying a color signal on the screen of the television set 200 of the PAL system even when a signal of NTSC system is inputted as an input signal in a stop state in which the power of the VTR is on and neither recording nor reproducing is executed.

In order to achieve the aforementioned objective, according to the present invention, there is provided a video tape recorder of the PAL system as defined in claim 1.

According to the present invention, by converting the composite video signal of the NTSC system into the composite video signal of the PAL system and outputting the signal to the television set 200 of the PAL system when the composite video signal of the NTSC system is inputted in the stage of the stop mode of the VTR of the PAL system, the picture of the inputted composite video signal of the NTSC system can be made visible inclusive of the color signal. Furthermore, the aforementioned converter circuit can be constructed by diverting the recording and reproducing circuit of the prior art recording and reproducing circuit 100 through slight modification, so that the circuit can be manufactured with a simple construction at inexpensive manufacturing cost.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a block diagram showing a construction of a recording, reproducing and stop circuit 100a for a VTR of the PAL system according to a first preferred embodiment of the present invention;
Fig. 2 is a block diagram showing a construction of a local oscillator circuit 6a shown in Fig. 1;
Fig. 3 is a block diagram showing a construction of a system converter 7a shown in Fig. 1;
Fig. 4 is a block diagram showing a construction of a subtraction signal generator circuit 37a shown in Fig. 1;
Fig. 5 is a timing chart showing an operation of the subtraction signal generator circuit 37a shown in Fig. 4;
Fig. 6 is a block diagram showing a construction of a frequency subtracter 15 shown in Fig. 1;
Fig. 7 is a timing chart showing an operation of the frequency subtracter 15 shown in Fig. 6;
Fig. 8 is a block diagram showing a construction of a local oscillator circuit 6b for a recording, reproducing and stop circuit for a VTR of the PAL system according to a second preferred embodiment;
Fig. 9 is a block diagram showing a construction of a prior art recording and reproducing circuit 100 of the PAL system;
Fig. 10 is a block diagram showing a construction of the local oscillator circuit 6 shown in Fig. 9; and
Fig. 11 is a block diagram showing a construction of a system converter 7 of the prior art shown in Fig. 9 and the second preferred embodiment shown in Fig. 8.

### DETAILED DESCRIPTION OF THE PREFERRED EMBODIMENTS

Preferred embodiments of the present invention will be described below with reference to the accompanying drawings.

### FIRST PREFERRED EMBODIMENT

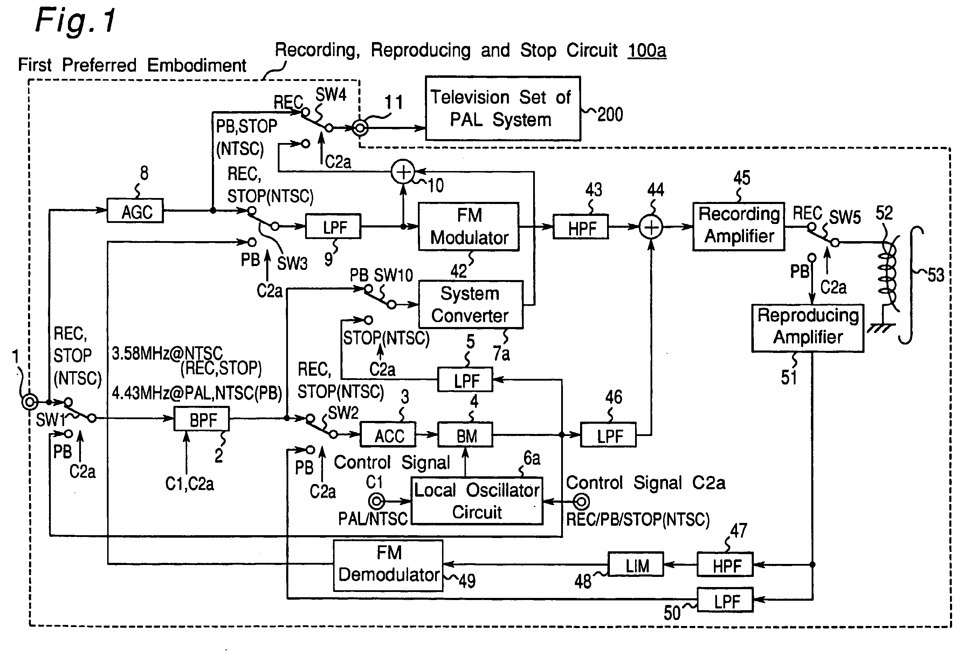

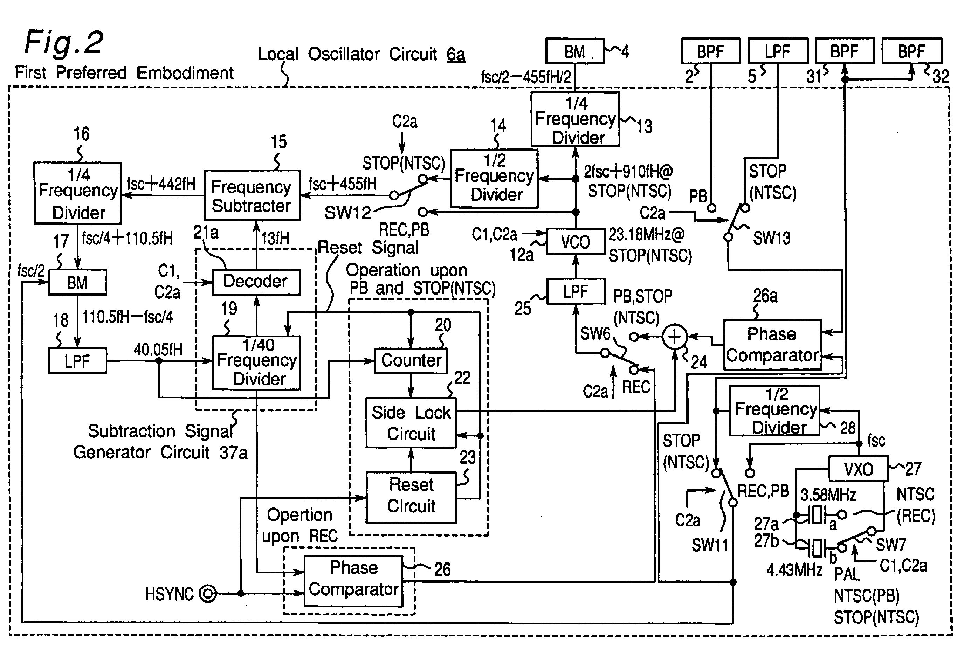

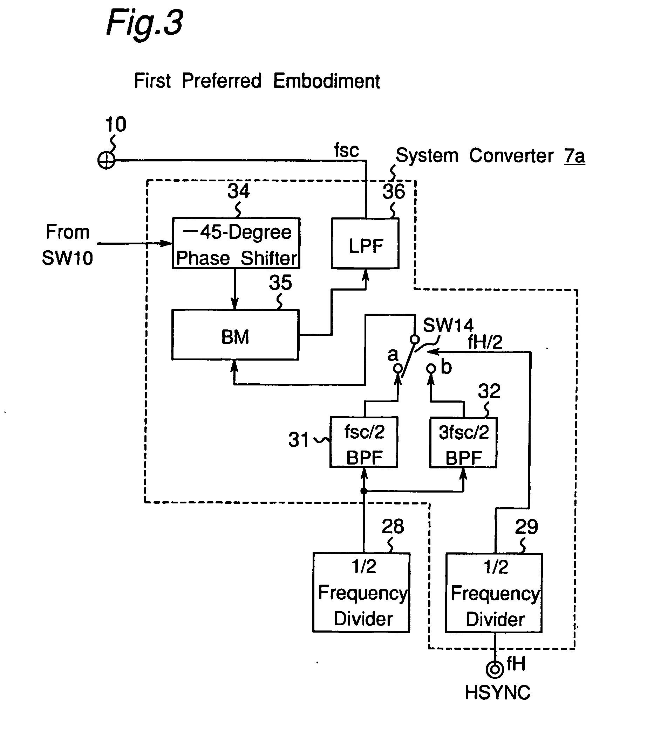

Fig. 1 is a block diagram showing a construction of a recording, reproducing and stop circuit 100a for a VTR of the PAL system according to a first preferred embodiment of the present invention, Fig. 2 is a block diagram showing a construction of a local oscillator circuit 6a shown in Fig. 1, and Fig. 3 is a block diagram showing a construction of a system converter 7a shown in Fig. 1. In Figs. 1 through 3, components similar to those of Figs. 9 through 11 are denoted by the same reference numerals. Further, the frequencies of signals in the local oscillator circuit 6a shown in Fig. 2 represent those in a stop state in which the power of the VTR is turned on but neither recording nor reproducing is executed. In a recording mode and a reproducing mode, the local oscillator circuit 6a shown in Fig. 2 operates with the frequencies of the signals as shown in Fig. 10.

The recording, reproducing and stop circuit 100a for the VTR of the PAL system of the first preferred embodiment differs from the prior art recording and reproducing circuit 100 mainly in that a circuit for a stop mode (STOP) of the NTSC system is provided in addition to the recording mode (REC) and the reproducing mode (PB), and the different points thereof are as follows:
(a) A control signal C2a for designating the recording mode (REC), the reproducing mode (PB) and the stop mode (STOP) of the NTSC system is used in place of the control signal C2.
(b) The switches SW1 through SW3 are switched over selectively to the REC and STOP (NTSC) side or the PB side according to the control signals C1 and C2a.
(c) The switch SW4 is switched over selectively to the REC side or the PB and STOP (NTSC) side according to the control signals C1 and C2a.
(d) The switch SW5 is switched over selectively to the REC side or the PB side according to the control signal C2a.
(e) A switch SW10 is newly provided, and is switched over selectively to the PB side or the STOP (NTSC) side according to the control signal C2a, and a signal from the BPF 2 is inputted to the system converter 7a via the PB side of the switch SW10.
(f) A system converter 7a is newly provided in place of the system converter 7.
(g) An LPF 5 is newly provided, and a signal from the LPF 5 is inputted to the system converter 7a via the STOP (NTSC) side of the switch SW10.

The local oscillator circuit 6a of the first preferred embodiment differs from the prior art local oscillator circuit 6b in the following points.
(a) Switches SW11, SW12 and SW13 are newly provided, and the switches SW11 through SW13 are switched over selectively to the REC and PB side or the STOP (NTSC) side according to the control signal C2a.
(b) A 1/2 frequency divider 28 is newly provided.
(c) The switch SW6 is switched over selectively to the PB and STOP (NTSC) side or the REC side according to the control signal C2a.
(d) A 1/2 frequency divider 14 is newly provided.
(e) A VCO 12a is provided in place of the VCO 12, and the VCO 12a generates an oscillation signal having an oscillation frequency of 23.18 MHz = 2fsc + 910fH in the stop mode of the NTSC system.
(f) A decoder 21a is provided in place of the decoder 21, and the decoder 21a divides the frequency of the signal from the 1/40 frequency divider 19 into a signal having a frequency 13/40 times the original frequency, and then, outputs the signal obtained after the frequency division to the frequency subtracter 15. In this case, a subtraction signal generator circuit provided with the decoder 21a is denoted by the reference numeral 37a.

The system converter 7a of the first preferred embodiment differs from the prior art system converter 7 in the following points.
(a) A switch SW14 is provided in place of the switch SW8.
(b) Two BPFs 31 and 32 are provided in place of the frequency doubler 39. In this case, the center frequency of the pass-band of the BPF 31 is fsc/2, while the center frequency of the pass-band of the BPF 32 is (3/2)fsc.

The construction and operation of the recording, reproducing and stop circuit 100a in the stop mode of the NTSC system will be described below mainly in regard to the aforementioned points of difference.

Referring to Fig. 1, first of all, a composite video signal of the NTSC system is inputted from the input terminal 1, and then, the composite video signal is inputted to the BPF 2 via the REC and STOP (NTSC) side of the switch SW1. The BPF 2 removes the luminance signal from the inputted composite video signal, extracts the chrominance sub-carrier signal through band-pass filtering, and then, outputs the resulting chrominance sub-carrier signal to the ACC 3 via the REC and STOP (NTSC) side of the switch SW2. The ACC 3 makes the amplitude of the inputted chrominance sub-carrier signal constant, and then, outputs the signal to the BM 4. The BM 4 frequency-converts the inputted chrominance sub-carrier signal into a chrominance sub-carrier signal of the NTSC system having a sub-carrier frequency fsc/2 (where, in this case, fsc is the sub-carrier frequency of the chrominance sub-carrier signal of the PAL system), and then, outputs the resulting chrominance sub-carrier signal to the system converter 7a as shown in Fig. 3 via the LPF 5 which removes the unnecessary components generated in the frequency conversion stage and via the STOP (NTSC) side of the switch SW10.

In the local oscillator circuit 6a shown in Fig. 2, the switch SW7 is switched over to the b-side, and the VXO 27 generates an oscillation signal having a sub-carrier frequency fsc of the chrominance sub-carrier signal of the PAL system having a frequency of 4.43 MHz, and then, outputs the oscillation signal to the 1/2 frequency divider 28. The 1/2 frequency divider 28 divides the frequency of the oscillation signal by two, and then, outputs the rectangular waveform signal obtained after the frequency division to the BPFs 31 and 32. In the system converter 7a shown in Fig. 3, the BPF 31 extracts the signal of the frequency component fsc/2 from the inputted rectangular waveform signal and then outputs the extracted signal to the a-side of the switch SW14, while the BPF 32 extracts the frequency component (3/2)fsc from the inputted rectangular waveform signal and then outputs the extracted signal to the b-side of the switch SW14. On the other hand, the 1/2 frequency divider 29 divides the frequency of the horizontal synchronizing signal HSYNC of the inputted horizontal scanning frequency fH, and then outputs a rectangular waveform signal having a frequency fH/2 to the switching control terminal of the switch SW14. Therefore, the switch SW14 is repetitively switched over alternately selectively to the a-side or the b-side according to the signal level in the case of the rectangular waveform signal having the frequency fH/2. By this operation, the output signal from the BPF 31 and the output signal from the BPF 32 are switched over alternately every interval of the inverse of the frequency fH/2 by the switch SW14, to be outputted to the BM 35.

The chrominance sub-carrier signal of the NTSC system whose sub-carrier frequency is fsc/2 outputted from the LPF 5 shown in Fig. 1 is inputted to the -45-degree phase shifter 34 of the system converter 7a shown in Fig. 3 via the STOP (NTSC) side of the switch SW10. The -45-degree phase shifter 34 shifts the phase of the color burst signal of the inputted chrominance sub-carrier signal by - 45 degrees, and then, outputs the resulting phase-shifted signal to the BM 35. When the output signal from the switch SW14 is the signal having the frequency fsc/2, the BM 35 outputs the chrominance sub-carrier signal whose sub-carrier frequency is set back to the frequency fsc to the LPF 36. When the output signal from the switch SW14 is a signal of 3fsc/2, the BM 35 inverts the phase of the (R-Y) axis signal of the NTSC system, and then, outputs the phase-inverted chrominance sub-carrier signal whose sub-carrier frequency is fsc to the LPF 36. In this case, the switch SW14 is switched over alternately every interval of the inverse of the frequency fH/2. Therefore, the output signal from the BM 35 becomes the chrominance sub-carrier signal of the PAL system, and the LPF 36 removes the unnecessary frequency components from the inputted chrominance sub-carrier signal, and then, outputs the chrominance sub-carrier signal of the PAL system to the adder 10. That is, in the system converter 7a, the output signal from the LPF 5 is converted into the chrominance sub-carrier signal of the PAL system.

Then, the adder 10 shown in Fig. 1 adds the luminance signal from the LPF 9 to the chrominance sub-carrier signal of the PAL system from the LPF 36 of the system converter 7a shown in Fig. 3 so as to obtain the composite video signal of the PAL system, or the result of addition. The composite video signal of the PAL system is outputted to the television set 200 of the PAL system via the switch SW4 and the output terminal 11. In this case, the picture of the video signal converted from the composite video signal of the NTSC system into the composite video signal of the PAL system is made visible by means of the television set 200 of the PAL system.

In the local oscillator circuit 6a shown in Fig. 2, the phase comparator 26a compares the color burst signal of the chrominance sub-carrier signal that is the output signal from the LPF 5 shown in Fig. 1 with the signal having the frequency fsc/2 inputted from the 1/2 frequency divider 28 via the STOP (NTSC) side of the switch SW11, and then, outputs the resulting phase error signal to the VCO 12a via the adder 24, the PB and STOP (NTSC) side of the switch SW6 and the LPF 25 for smoothing the signal. The VCO 12a is controlled so that its oscillation frequency becomes 2fsc + 910fH = 23.18 MHz according to the phase error signal from the phase comparator 26. The frequency of the oscillation signal generated by the VCO 12a is divided by four by the 1/4 frequency divider 13, and thereafter, the oscillation signal obtained after the frequency division is supplied to the BM 4 as a local oscillation signal for frequency conversion in the BM 4. In this case, the frequency of the local oscillation signal is fsc/2 + 455fH/2.

The chrominance sub-carrier signal inputted from the ACC 3 to the BM 4 is the chrominance sub-carrier signal of the NTSC system, and therefore, the horizontal scanning frequency fH at the frequency fsc + 455fH/2 of the local oscillation signal outputted from the 1/4 frequency divider 13 is 15.734 kHz of the NTSC system. The 1/2 frequency divider 14 shown in Fig. 2 divides the frequency of the oscillation signal from the VCO 12a by two, and then, outputs the signal having the frequency fsc + 455fH obtained after the frequency division to the frequency subtracter 15 via the STOP (NTSC) side of the switch SW12. The frequency subtracter 15 subtracts the frequency 13fH of the signal of frequency 13fH outputted from the decoder 21a from the frequency of the output signal outputted from the 1/2 frequency divider 14, to generate a signal of fsc + 442fH, and outputs the signal to the 1/4 frequency divider 16. Then, the 1/4 frequency divider 16 divides the frequency of the inputted signal by four, and then, outputs a signal having a frequency fsc/4 + 110.5fH obtained after the frequency division to the BM 17. The BM 17 executes balanced modulation for the output signal from the 1/4 frequency divider 16 and the output signal from the 1/2 frequency divider 28, to generate a signal having a frequency (110.5fH - fsc/4), and then, outputs the resulting generated signal to the 1/40 frequency divider 19 and the counter 20 via the LPF 18 which removes the unnecessary frequency components.

In this case, fH is the horizontal scanning frequency of the NTSC system, whereas fsc is the sub-carrier frequency of the chrominance sub-carrier signal of the PAL system. In the PAL system, the sub-carrier frequency fsc of the chrominance sub-carrier signal is expressed by 1135 fH/4, when fH is the horizontal scanning frequency of the PAL system having a frequency of 15.625 kHz. Since the horizontal scanning frequency fH of the NTSC system is 15.734 kHz, if the sub-carrier frequency fsc of the chrominance sub-carrier signal of the PAL system is expressed by the horizontal scanning frequency fH of the NTSC system, it is about 281.778 fH. Therefore, the frequency (110.5fH - fsc/4) of the output signal from the BM 17 is about 40.05fH.

To the reset circuit 23 is inputted the horizontal synchronizing signal HSYNC, and the reset circuit 23 outputs a reset signal in synchronization with the horizontal synchronizing signal every 8H and resets the 1/40 frequency divider 19, the counter 20 and the side lock circuit 22 into their initial states. The counter 20 counts the signal having the frequency 40.05fH from the LPF 18 as a clock, and then, outputs the count value to the side lock circuit 22. The side lock circuit 22 outputs a control signal so as to increase the oscillation frequency of the VCO 12a when the count value of the counter 20 is smaller than 318, and then, outputs a control signal so as to decrease the oscillation frequency of the VCO 12a when the count value is not smaller than 322. By outputting the output control signal from the side lock circuit 22 to the VCO 12a via the adder 24, the PB and STOP (NTSC) side of the switch SW6 and the LPF 25, the oscillation frequency of the VCO 12a is controlled so that the frequency of the output signal from the LPF 18 falls within a range of (40-1/4)fH to (40+1/4)fH. The oscillation frequency of the VCO 12a is controlled by the phase comparator 26 within the frequency range under the control of the side lock circuit 22, and therefore, the frequency is controlled to an oscillation frequency 2fsc + 910fH.

On the other hand, the 1/40 frequency divider 19 divides the frequency of the output signal having the frequency 40.05fH from the LPF 18 by forty, and then, outputs the signal obtained after the frequency division to the decoder 21a. The decoder 21a decodes the inputted signal to generate thirteen pulses within forty clocks with the output signal from the LPF 18 served as a clock, i.e., the decoder 21 divides the frequency of the inputted signal into a signal having a frequency 13/40 times the original frequency, and then, outputs the signal to the frequency subtracter 15. In this case, the frequency of the output signal from the LPF 18 is 40.05fH, however, the 1/40 frequency divider 19 is initialized every 8H by the reset signal from the reset circuit 23. Therefore, the influence of the fraction frequency components of 0.05fH is removed, so that the frequency of the output signal from the decoder 21 becomes 13fH. Consequently, the frequency of the output signal from the subtraction signal generator circuit 37a becomes 13fH and is used as a subtraction frequency in the frequency subtracter 15.

In the local oscillator circuit 6a constructed as above, the frequency of the output signal from the 1/4 frequency divider 13, or the output signal from the local oscillator circuit 6a becomes fsc/2 + 455fH/2, so that the output signal from the 1/4 frequency divider 13 becomes the local oscillation signal for the frequency conversion in the BM 4.

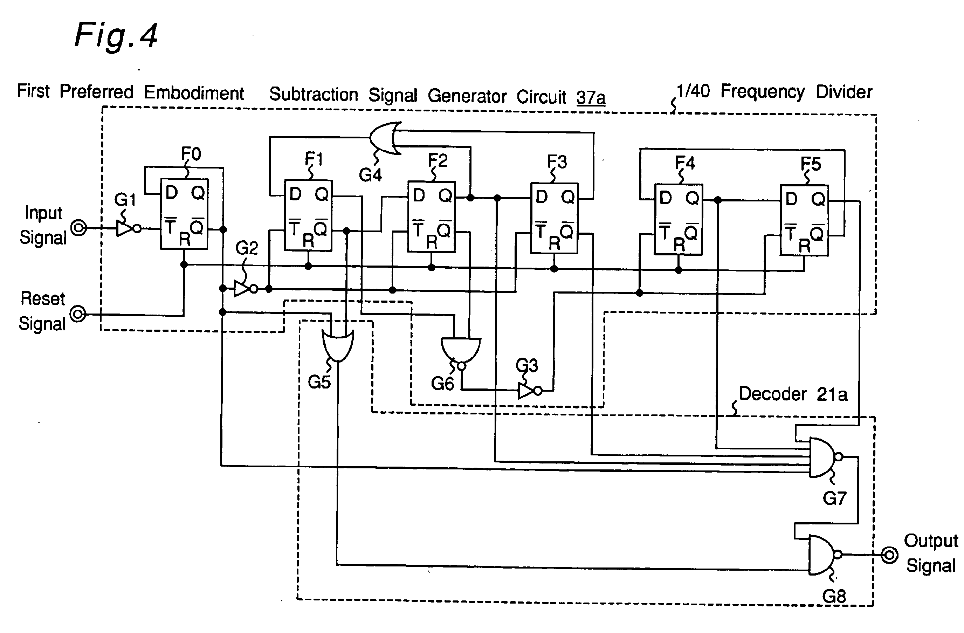

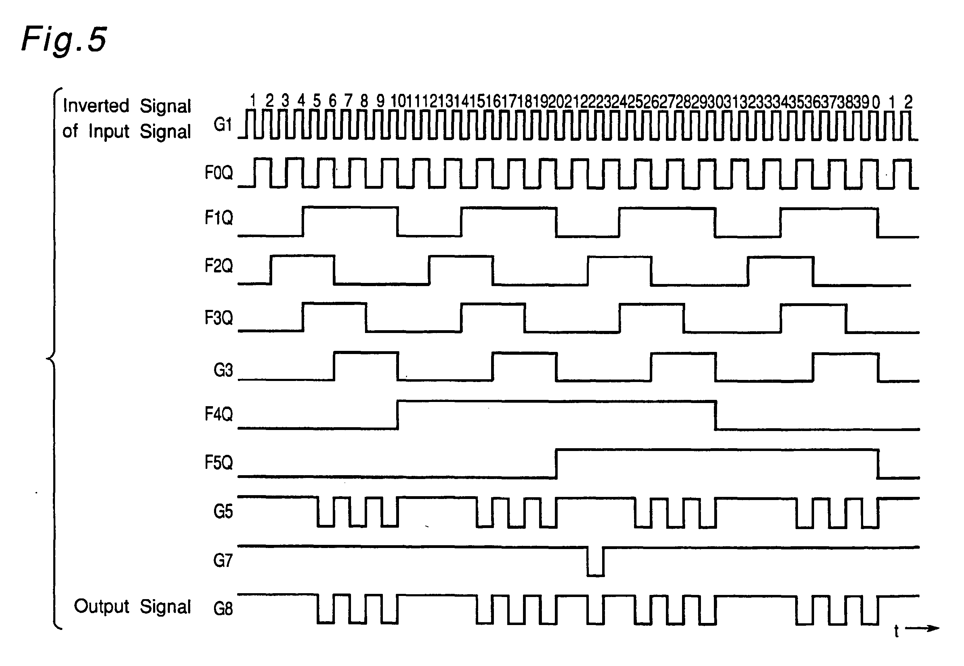

Fig. 4 is a block diagram showing a construction of the subtraction signal generator circuit 37a shown in Fig. 1, and Fig. 5 is a timing chart showing an operation of the subtraction signal generator circuit 37a shown in Fig. 4.

Referring to Fig. 4, to the subtraction signal generator circuit 37a are inputted the output signal from the LPF 18 shown in Fig. 2 as an input signal, while the output signal from the reset circuit 23 shown in Fig. 2 as a reset signal. The subtraction signal generator circuit 37a is comprised of a 1/40 frequency divider 19 and a decoder 21a. In Fig. 4 are shown inverters G1, G2 and G3, OR gates G4 and G5, NAND gates G6, G7 and G8, D-type flip-flops F0, F1, F2, F3, F4 and F5.

The construction and operation of the subtraction signal generator circuit 37a will be described hereinafter.

Referring to Fig. 4, the output signal having the frequency 40.05fH from the LPF 18 shown in Fig. 1 is inputted as a clock to the D-type flip-flop F0 via the inverter G1. In this case, the D-type flip-flop F0 whose inverted output terminal and D input terminal are connected to each other constitutes a 1/2 frequency divider. An output signal from the D-type flip-flop F0 is inputted as a clock to the D-type flip-flops F1, F2 and F3 via the inverter G2. In this case, the D-type flip-flops F1, F2 and F3 and G4 constitute a 1/5 frequency divider. The NAND gate G6 decodes the signal obtained with its frequency divided by five, and supplies the resulting decoded signal to the D-type flip-flops F4 and F5 via the inverter G3. In this case, the D-type flip-flops F4 and F5 constitute a 1/4 frequency divider. Therefore, with the above arrangement, the 1/40 frequency divider 19 is constituted. Then, the decoder 21a constituted by the OR gate G5 and the NAND gates G7 and G8 decodes the output signals of the elements constituting the 1/40 frequency divider 19, to generate a signal of thirteen pulses while the input signal is inputted by forty pulses, and then, outputs the generated signal from an output terminal of the NAND gate G8.

As apparent from Fig. 5, since the reset pulse signal is inputted every 8H, a signal of thirteen pulses is outputted for an interval of 1H from the output terminal of the decoder 21a. Therefore, the signal frequency of the output signal from the subtraction signal generator circuit 37a becomes 13fH.

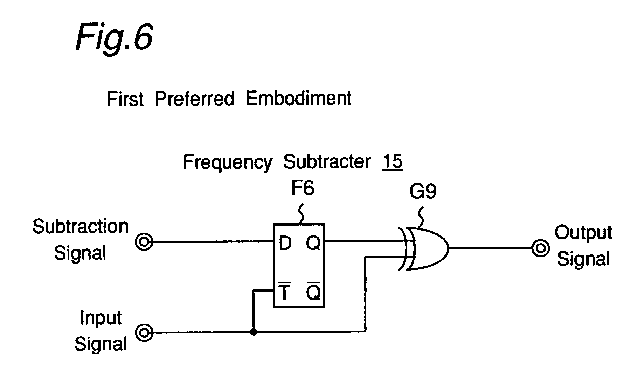

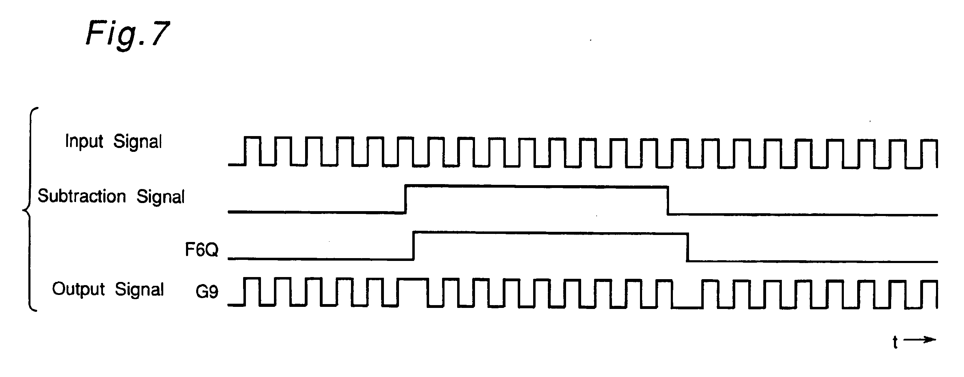

Fig. 6 is a block diagram showing a construction of the frequency subtracter 15 shown in Fig. 1, and Fig. 7 is a timing chart showing an operation of the frequency subtracter 15 shown in Fig. 6.

Referring to Fig. 6, the frequency subtracter 15 is comprised of a D-type flip-flop F6 and an EXCLUSIVE-OR gate G9. The output signal from the 1/2 frequency divider 14 shown in Fig. 2 is inputted as an input signal, and the input signal is inputted as a clock to the D-type flip-flop F6 and to a second input terminal of the EXCLUSIVE-OR gate G9. The signal frequency of the input signal is fsc + 455fH. On the other hand, the output signal from the decoder 21a shown in Fig. 2 is inputted as a subtraction signal, and the signal frequency of this subtraction signal is 13fH. Further, a signal from the output terminal of the D-type flip-flop F6 is inputted to a first input terminal of the EXCLUSIVE-OR gate G9, and a signal from the output terminal of the EXCLUSIVE-OR gate G9 becomes an output signal from the frequency subtracter 15.

As apparent from Fig. 7, a half pulse of the input signal drops out at each of the rise time point and the fall time point of the subtraction signal. That is, the number of signal pulses of the input signal is reduced by one pulse per pulse of the subtraction signal. With this arrangement, the signal frequency of the output signal becomes a frequency obtained by subtracting the signal frequency of the subtraction signal from the signal frequency of the input signal.

As described above, according to the present preferred embodiment, the recording, reproducing and stop circuit 100a including the circuit for the stop mode of the NTSC system is constructed. Therefore, by converting the composite video signal of the NTSC system into the composite video signal of the PAL system and outputting the resulting composite video signal to the television set 200 of the PAL system in the case where the composite video signal of the NTSC system is inputted in the stage of the stop mode of the VTR of the PAL system, the picture of the inputted composite video signal of the NTSC system can be made visible inclusive of the color signal. The recording, reproducing and stop circuit 100a can be constructed by appropriating the recording and reproducing circuit of the prior art recording and reproducing circuit 100 through slight modification, so that the circuit can be manufactured with a simple construction at inexpensive manufacturing cost.

### SECOND PREFERRED EMBODIMENT (not covered by the invention)

Fig. 8 is a block diagram showing a construction of a local oscillator circuit 6b for a recording, reproducing and stop circuit for a VTR of the PAL system according to a second preferred embodiment. The second preferred embodiment employs the system converter 7 shown in Fig. 11. The frequencies shown in Fig. 8 are the frequencies in the stop mode of the NTSC system. The circuit operates in the recording mode and the reproducing mode in a manner as shown in Fig. 10.

This local oscillator circuit 6b of the second preferred embodiment differs from the local oscillator circuit 6a of the first preferred embodiment in the following points.
(a) A 1/4 frequency divider 28a is provided in place of the 1/2 frequency divider 28.
(b) The oscillation signal from the VXO 27 is outputted to the frequency doubler 39 inside the system converter 7 shown in Fig. 11.
(c) A VCO 12b is provided in place of the VCO 12a. In this case, the VCO 12b is constructed so as to oscillate at a frequency of 16.02 MHz = 2fsc + 455fH in the stop mode of the NTSC system.
(d) A 1/2 frequency divider 13a is newly provided.
(e) A switch SW15 is newly provided, and the switch SW15 is switched over selectively to the STOP (NTSC) side or the REC and PB side according to the control signal C2a.
(f) A decoder 21b is provided in place of the decoder 21a.
(g) A side lock circuit 22a is provided in place of the side lock circuit 22.
(h) A 1/8 and 1/4 frequency divider 16a is provided in place of the 1/4 frequency divider 16. The 1/8 and 1/4 frequency divider 16a serves as a 1/8 frequency divider in the stop mode of the NTSC system and serves as a 1/4 frequency divider in the recording or reproducing mode.

The construction and operation of the local oscillator circuit 6b of the second preferred embodiment will be described below mainly in regard to the aforementioned points of difference. It is to be noted that the recording, reproducing and stop circuit 100a shown in Fig. 1 is used as a recording, reproducing and stop circuit, and the system converter 7 shown in Fig. 11 is used as a system converter.

First of all, a composite video signal of the NTSC system is inputted from the input terminal 1 and thereafter inputted to the BPF 2. The BPF 2 removes the luminance signal from the composite video signal,so as to extract the chrominance sub-carrier signal through band-pass filtering, and then, outputs the resulting chrominance sub-carrier signal to the BM 4 via the REC and STOP (NTSC) side of the switch SW2 and the ACC 3. The BM 4 frequency-converts the chrominance sub-carrier signal into the chrominance sub-carrier signal of the NTSC system whose sub-carrier frequency is fsc of the PAL system, and then, outputs the resulting chrominance sub-carrier signal to the -45-degree phase shifter 34 of the system converter 7 shown in Fig. 11 via the LPF 5 and the STOP (NTSC) side of the switch SW10.

The operation of the system converter 7 shown in Fig. 11 is similar to that of the prior art, and the system converter 7 converts the chrominance sub-carrier signal of the NTSC system whose sub-carrier frequency conforms to the PAL system into a chrominance sub-carrier signal of the PAL system, and then, outputs the resulting chrominance sub-carrier signal to the adder 10 shown in Fig. 1. Then, the adder 10 shown in Fig. 1 adds the luminance signal from the LPF 9 to the chrominance sub-carrier signal of the PAL system from the switch SW8 of the system converter 7 shown in Fig. 11 so as to obtain a composite video signal of the PAL system, or the result of addition. The composite video signal of the PAL system is outputted to the television set 200 of the PAL system via the switch SW4 and the output terminal 11. In this case, the picture of the video signal converted from the composite video signal of the NTSC system into the composite video signal of the PAL system is made visible by the television set 200 of the PAL system.

In the local oscillator circuit 6b shown in Fig. 8, the phase comparator 26a compares the color burst signal of the chrominance sub-carrier signal of the output signal from the LPF 5 with the signal having the frequency fsc from the VXO 27, and then, outputs the resulting phase error signal to the VCO 12b via the adder 24, the PB and STOP (NTSC) side of the switch SW6 and the LPF 25. In this case, the VCO 12b is controlled so that its oscillation frequency becomes (2fsc + 455fH), and the frequency of the oscillation signal is divided by two by the 1/2 frequency divider 13a, and thereafter, the frequency-divided signal is outputted to the BM 4 as a local oscillation signal for frequency conversion in the BM 4. The frequency of the local oscillation signal becomes fsc + 455fH/2. Then, the frequency subtracter 15 subtracts the frequency 7fH of the output signal outputted from the decoder 21b from the frequency of the output signal outputted from the VCO 12b, and then, outputs the resulting signal having a frequency (2fsc + 448fH) of the result of subtraction to the frequency divider 16a. The frequency divider 16a divides the frequency of the inputted signal by eight, and then, outputs a signal having a frequency (fsc/4 + 56fH) obtained after the frequency division to the BM 17. On the other hand, the 1/4 frequency divider 28a divides the frequency of the output signal from the VXO 27 by four, and then, outputs the frequency fsc/4 obtained after the frequency division to the BM 17 via the STOP (NTSC) side of the switch SW11. The BM 17 executes balanced modulation for the output signal from the frequency divider 16a and the output signal from the 1/4 frequency divider 28a to generate a signal having a frequency 56fH, and then, outputs the resulting generated signal via the LPF 18 to a 1/56 frequency divider 19a and the counter 20.

On the other hand, the horizontal synchronizing signal HSYNC is inputted to the reset circuit 23, and the reset circuit 23 outputs a reset signal in synchronization with the horizontal synchronizing signal every 8H to execute resetting so that the 1/56 frequency divider 19a, the counter 20 and the side lock circuit 22a are put into their initial states. The counter 20 counts the signal having the frequency 56fH from the LPF 18 as a clock in the interval 8H. The side lock circuit 22a outputs a control signal so as to increase the oscillation frequency of the VCO 12 when the count value is smaller than 446, and then, outputs a control signal so as to decrease the oscillation frequency of the VCO 12 when the count value is not smaller than 450. The output control signal from the side lock circuit 22 is outputted to the VCO 12b via the LPF 25, and the VCO 12b is controlled so that the frequency of the output signal from the LPF 18 falls within a range of (56 - 1/4)fH to (56 + 1/4)fH. The oscillation frequency of the VCO 12b is controlled by the phase comparator 26 within the frequency range controlled by the side lock circuit 22a, and therefore, the oscillation frequency of the VCO 12b is controlled so that it becomes 2fsc + 455fH. The 1/56 frequency divider 19a divides the frequency of the output signal from the LPF 18 by fifty six, and then, outputs the signal obtained after the frequency division to the decoder 21b. The decoder 21b decodes the output signal from the 1/56 frequency divider 19a, to generate seven pulse signals in an inverse of 56 clocks with the output signal from the LPF 18 used as a clock. That is, the decoder 21b multiplies the frequency of the output signal from the 1/56 frequency divider 19a by seven, and then, outputs the resulting frequency-multiplied signal to the frequency subtracter 15. By this operation, the frequency of the output signal from the decoder 21b becomes 7fH, and the frequency of the output signal from a subtraction signal generator circuit 37b also becomes 7fH.

The frequency of the output signal from the local oscillator circuit 6b constructed as above becomes fsc + 455fH/2, and the output signal becomes a local oscillation signal for frequency conversion in the BM 4.

As described above, according to the present preferred embodiment, the recording, reproducing and stop circuit 100a provided with the local oscillator circuit 6b including the circuit for the stop mode of the NTSC system is constructed. Therefore, by converting the composite video signal of the NTSC system into the composite video signal of the PAL system and outputting the signal to the television set 200 of the PAL system when the composite video signal of the NTSC system is inputted in the stage of the stop mode of the VTR of the PAL system, the picture of the inputted composite video signal of the NTSC system can be made visible inclusive of the color signal. The recording, reproducing and stop circuit 100a provided with the local oscillator circuit 6b can be constructed by appropriating the recording and reproducing circuit of the prior art recording and reproducing circuit 100 through slight modification, so that the circuit can be manufactured with a simple construction at inexpensive manufacturing cost.

According to the present preferred embodiments of the invention, by converting the composite video signal of the NTSC system into the composite video signal of the PAL system and outputting the signal to the television set 200 of the PAL system when the composite video signal of the NTSC system is inputted in the stage of the stop mode of the VTR of the PAL system, the picture of the inputted composite video signal of the NTSC system can be made visible inclusive of the color signal. Furthermore, the aforementioned converter circuit can be constructed by diverting the recording and reproducing circuit of the prior art recording and reproducing circuit 100 through slight modification, so that the circuit can be manufactured with a simple construction at inexpensive manufacturing cost.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A video tape recorder of the PAL system comprising a converter circuit for use in a stop mode of the NTSC system and for converting an inputted composite video signal of the NTSC system into a composite video signal of the PAL system and for outputting a resulting composite video signal, and a recording and reproducing circuit for use in a recording and reproducing mode of a video signal,
said converter circuit comprising:
band-pass filtering means (2) for band-pass-filtering a chrominance sub-carrier signal from the inputted composite video signal of the NTSC system, and for outputting the chrominance sub-carrier signal;
low-pass filtering means (9) for low-pass-filtering a luminance signal from said inputted composite video signal of the NTSC system, and for outputting the luminance signal;
a local oscillator circuit (6a) for generating a local oscillation signal having a predetermined local oscillation frequency, and for outputting the local oscillation signal;
frequency converting means (4) for frequency- converting the chrominance sub-carrier signal of the NTSC system outputted from said band-pass filtering means (2) into a chrominance sub-carrier signal of the NTSC system whose sub-carrier frequency is a predetermined sub-carrier frequency, by means of the local oscillation signal outputted from said local oscillator circuit (6a), and' for outputting a resulting chrominance sub-carrier signal of the NTSC system;
system converting means (7a) for converting the chrominance sub-carrier signal of the NTSC system outputted from said frequency converting means (4) into a chrominance sub-carrier signal of the PAL system; and for outputting a resulting chrominance sub-carrier signal of the PAL system; and
adding means (10) for adding the luminance signal outputted from said low-pass filtering means (9) to the chrominance sub-carrier signal of the PAL system outputted from said system converting means (7a), and for outputting a signal of the result of addition as a composite video signal of the PAL system,
**characterized in that**
said local oscillator circuit (6a) generates a local oscillation signal having a local oscillation frequency of fsc/2 + 455fH/2 where fsc is the chrominance sub-carrier frequency of the PAL system and fH is the horizontal scanning frequency of the NTSC system, and outputs the local oscillation signal;
wherein said frequency converting means (4) frequency- converts the chrominance sub-carrier signal of the-NTSC system into a chrominance sub-carrier signal of the NTSC system having a frequency of fsc/2, and outputs a resulting chrominance sub-carrier signal of the NTSC system,
wherein said system converting means (7a) converts the chrominance sub-carrier signal of the NTSC system outputted from said frequency converting means (4) into a chrominance sub-carrier signal of the PAL system by use of an oscillation signal which is selected by a switch (SW14) for repetitively switching over alternately one of a signal having a frequency of fsc/2 and a signal having a frequency of 3fsc/2, which are extracted from an oscillation signal having a frequency fsc of the chrominance sub-carrier signal of the system H<PAL>, outputted from an oscillator (27), at timing of a switching signal for selecting the oscillation signal by said switch (sw14) having a frequency of fH/2, and outputs a resulting chrominance sub-carrier signal.

2. The video tape recorder of the PAL system as claimed in Claim 1,
wherein said local oscillator circuit (6a) comprises:
a voltage controlled type oscillator (12a) for oscillating within a predetermined oscillation frequency range to generate a local oscillation signal, and for outputting the local oscillation signal;
frequency subtracting means (15) for subtracting a frequency of an inputted subtraction signal, from the frequency of the local oscillation signal outputted from said voltage controlled type oscillator (12a) or a frequency obtained by dividing the frequency of the local oscillation signal by a predetermined third frequency division ratio, and for outputting a signal having a frequency of the result of subtraction;
first frequency dividing means (16) for dividing the frequency of the signal outputted from said frequency subtracting means (15) by a predetermined first frequency division ratio, and for outputting a signal obtained after the frequency division;
a crystal oscillator (27a, 27b) for generating an oscillation signal having the sub-carrier frequency of the chrominance sub-carrier signal of the PAL system, and for outputting the oscillation signal;
a frequency converter circuit (17, 18) for executing frequency conversion so that the frequency of the signal outputted from said first frequency dividing means (16) is changed by the frequency of the oscillation signal outputted from said crystal oscillator (27a, 27b) or a frequency obtained by dividing the oscillation signal outputted from said crystal oscillator (27a, 28b) by a predetermined fourth frequency division ratio, and for outputting a signal obtained after the frequency conversion;
second frequency dividing means (14) for dividing the frequency of the signal outputted from said frequency converter circuit (17, 18) by a predetermined second frequency division ratio, and for outputting a signal obtained after the frequency division as said subtraction signal to said frequency subtracting means (15);
a phase comparator (26a) for comparing the oscillation signal outputted from said crystal oscillator (27a, 27b) with the signal outputted from said frequency converting means (4), and for outputting a resulting phase error signal to said voltage controlled type oscillator (12a); and
a side lock circuit (22) for detecting the oscillation frequency of said voltage controlled type oscillator (12a) by counting the signal from said frequency converter circuit (17) based on an inputted horizontal synchronizing signal, and for controlling the oscillation frequency of said voltage controlled type oscillator (12a) within a predetermined frequency range.

## Patentansprüche

1. Videorekorder des PAL-Systems umfassend eine Umwandlerschaltung zur Verwendung in einem Stopp-Modus eines NTSC-Systems und zum Umwandeln eines eingegebenen Composite-Video-Signals des NTSC-Systems in ein Composite-Video-Signal des PAL-Systems und zum Ausgeben eines resultierenden Composite-Video-Signals und eine Aufzeichnungs- und Wiedergabeschaltung zur Verwendung in einem Aufzeichnungs- und Wiedergabemodus eines Video-signals,
wobei die Umwandlerschaltung umfasst:
Bandpassfiltermittel (2) zum Bandpassfiltern eines Farbartzwischenträgersignals aus dem eingegebenen Composite-Video-Signal des NTSC-Systems und zum Ausgeben des Farbartzwischenträgersignals;
Tiefpassfiltermittel (9) zum Tiefpassfiltern eines Helligkeitssignals aus dem eingegebenen Composite-Video-Signal des NTSC-Systems und zum Ausgeben des Helligkeitssignals;
eine Lokaloszillatorschaltung (6a) zum Erzeugen eines eine vorbestimmte Lokaloszillationsfrequenz aufweisenden Lokaloszillationssignals und zum Ausgeben des Lokaloszillationssignals;
Frequenzumwandlungsmittel (4) zum Frequenzumwandeln des von den Bandpassfiltermittel (2) ausgebenden Farbartzwischenträgersignals des NTSC-Systems in ein Farbartzwischenträgersignal des NTSC-Systems, dessen Zwischenträgerfrequenz eine vorbestimmte Zwischenträgerfrequenz ist, durch das von der Lokaloszillatorschaltung (6a) ausgegebene Lokaloszillationssignal und zum Ausgeben eines resultierenden Farbartzwischenträgersignals des NTSC-Systems;
Systemumwandlungsmittel (7a) zum Umwandeln des von den Frequenzumwandlungsmitteln (4) ausgegebenen Farbartzwischenträgersignals des NTSC-Systems in ein Farbartzwischenträgersignals des PAL-Systems und zum Ausgeben eines resultierenden Farbartzwischenträgersignals des PAL-Systems; und
Hinzufügemittel (10) zum Hinzufügen des von den Tiefpassfiltermitteln (9) ausgegebenen Helligkeitssignals zu dem von den Systemumwandlungsmitteln (7a) ausgegebenen Farbartzwischenträgersignals des PAL-Systems und zum Ausgeben eines sich aus dem Hinzufügen ergebenden Signals als Composite-Video-Signals des PAL-Systems,
**dadurch gekennzeichnet, dass**
die Lokaloszillatorschaltung (6a) ein eine Lokaloszillatorfrequenz von fsc/2 + 455fH/2 aufweisendes Lokaloszillationssignal erzeugt, wobei fsc die Farbartzwischenträgerfrequenz des PAL-Systems und fH die horizontale Abtastfrequenz des NTSC-Systems ist, und das Lokaloszillationssignal ausgibt;
wobei die Frequenzumwandlungsmittel (4) das Farbartzwischenträgersignal des NTSC-Systems in ein eine Frequenz von fsc/2 aufweisendes Farbartzwischenträgersignal des NTSC-Systems frequenzumwandelt und ein resultierendes Farbartzwischenträgersignal des NTSC-Systems ausgibt,
wobei die Systemumwandlungsmittel (7a) das von den Frequenzumwandlungsmitteln (4) ausgegebene Farbartzwischenträgersignal des NTSC-Systems in ein Farbartzwischenträgersignal des PAL-Systems zu Zeiten eines eine Frequenz von fH/2 aufweisenden Schaltsignals zum Auswählen des Oszillationssignals durch einen Schalter (sw14) umwandeln, durch die Verwendung eines Oszillationssignals, welches durch den zum wiederholenden abwechselnden Schalten zwischen einem eine Frequenz von fsc/2 aufweisenden Signal und einem eine Frequenz von 3fsc/2 aufweisenden Signal, welche aus einem eine Frequenz fsc aufweisenden Oszillationssignal des von einem Oszillator (27) ausgegebenen Farbartzwischenträgersignals des PAL-Systems extrahiert werden, Schalter (sw14) ausgewählt wird, und ein resultierendes Farbartzwischenträgersignal ausgeben.

2. Videorekorder des PAL-Systems nach Anspruch 1,
wobei die Lokaloszillatorschaltung (6a) aufweist:
einen spannungsgesteuerten Oszillator (12a) zum Oszillieren in einem vorbestimmten Oszillationsfrequenzbereich zum Erzeugen eines Lokaloszillationssignals und zum Ausgeben des Lokaloszillationssignals;
Frequenzsubtraktionsmittel (15) zum Subtrahieren einer Frequenz eines eingegebenen Subtraktionssignals von der Frequenz des von dem spannungsgesteuerten Oszillator (12a) ausgegebenen Lokaloszillationssignals oder einer durch Teilen der Frequenz des Lokaloszillationssignals durch ein festgelegtes drittes Frequenzteilungsverhältnis erhaltenen Frequenz und zum Ausgeben eines eine Frequenz des Ergebnisses der Subtraktion aufweisenden Signals;
erste Frequenzteilungsmittel (16) zum Teilen der Frequenz des von den Frequenzsubtraktionsmitteln (15) ausgegebenen Signals durch ein festgelegtes erstes Frequenzteilungsverhältnis und zum Ausgeben eines nach der Frequenzteilung erhaltenen Signals;
einen Quarzoszillator (27a, 27b) zum Erzeugen eines die Zwischenträgerfrequenz des Farbartzwischenträgersignals des PAL-Systems aufweisenden Oszillationssignals und zum Ausgeben des Oszillationssignals;
eine Frequenzumwandlungsschaltung (17, 18) zum Ausführen von Frequenzumwandlung, so dass die Frequenz des von den ersten Frequenzteilungsmitteln (16) ausgegebenen Signals durch die Frequenz des von dem Quarzoszillator (27a, 27b) ausgegebenen Oszillationssignals oder eine durch Teilen des von dem Quarzoszillator (17a, 28b) ausgegebenen Oszillatorsignals durch ein festgelegtes viertes Frequenzteilungsverhältnis erhaltene Frequenz geändert wird, und zum Ausgeben eines nach der Frequenzumwandlung erhaltenen Signals;
zweite Frequenzteilungsmittel (14) zum Teilen der Frequenz des von der Frequenzumwandlungsschaltung (17, 18) ausgegebenen Signals durch ein vorbestimmtes zweites Frequenzteilungsverhältnis und zum Ausgeben eines nach der Frequenzteilung als das Subtraktionssignal erhaltenen Signals an die Frequenzsubtraktionsmittel (15);
einen Phasenkomparator (26a) zum Vergleichen des von dem Quarzoszillator (27a, 27b) ausgegebenen Oszillatorsignals mit dem von den Frequenzumwandlungsmitteln (4) ausgegebenen Signal und zum Ausgeben eines resultierenden Phasenfehlersignals an den spannungsgesteuerten Oszillator (12a); und
eine Side-Lock-Schaltung zum Detektieren der Oszillationsfrequenz des spannungsgesteuerten Oszillators (12a) durch Zählen des Signals von der Frequenzumwandlungsschaltung (17) basierend auf einem eingegebenen horizontalen Synchronisations signal und zum Steuern der Oszillationsfrequenz des spannungsgesteuerten Oszillators (12a) innerhalb eines vorbestimmten Frequenzbereichs.

## Revendications

1. Lecteur de cassettes vidéo du système PAL comprenant un circuit de conversion pour une utilisation en mode arrêt du système NTSC et pour convertir un signal vidéo composite entré du système NTSC en un signal vidéo composite du système PAL et pour délivrer un signal vidéo composite résultant, et un circuit d'enregistrement et de reproduction pour une utilisation en mode enregistrement et reproduction d'un signal vidéo,
ledit circuit de conversion comprenant :
un moyen de filtrage passe-bande (2) pour le filtrage de la bande passante d'un signal de sous-porteuse de chrominance provenant du signal vidéo composite entré du système NTSC et pour délivrer le signal de sous-porteuse de chrominance ;
un moyen de filtrage passe-bas (9) pour le filtrage passe-bas d'un signal de luminance provenant dudit signal vidéo composite entré du système NTSC, et pour délivrer le signal de luminance ;
un circuit de l'oscillateur local (6a) pour générer un signal d'oscillation locale ayant une fréquence d'oscillation locale prédéterminée et pour délivrer le signal d'oscillation locale ;
un moyen de conversion de la fréquence (4) pour convertir la fréquence du signal de sous-porteuse de chrominance du système NTSC sorti dudit moyen de filtrage passe-bande (2) en un signal de sous-porteuse de chrominance du système NTSC dont la fréquence de la sous-porteuse est une fréquence prédéterminée de la sous-porteuse, au moyen du signal d'oscillation locale sorti dudit circuit de l'oscillateur local (6a) et pour délivrer un signal de sous-porteuse de chrominance du système NTSC ;
un moyen de conversion du système (7a) pour convertir le signal de sous-porteuse de chrominance du système NTSC sorti dudit moyen de conversion de la fréquence (4) en un signal de sous-porteuse de chrominance du système PAL et pour délivrer un signal de sous-porteuse de chrominance résultant du système PAL ; et
un moyen additionneur (10) pour ajouter le signal de luminance sorti dudit moyen de filtrage passe-bas (9) au signal de sous-porteuse de chrominance du système PAL sorti dudit moyen de conversion du système (7a) et pour délivrer un signal du résultat de l'ajout comme signal vidéo composite du système PAL,
**caractérisé en ce que**
ledit circuit de l'oscillateur local (6a) génère un signal d'oscillation locale ayant une fréquence d'roscillation locale de fsc/2 + 455 fH/2 où fsc est la fréquence de la sous-porteuse de chrominance du système PAL et fH est la fréquence de balayage horizontal du système NTSC, et délivre le signal d'oscillation locale;
dans lequel ledit moyen de conversion de la fréquence (4) convertit la fréquence du signal de sous-porteuse de chrominance du système NTSC en un signal de sous-porteuse de chrominance du systèpe NTSC ayant une fréquence de fsc/2, et délivre un signal de sous-porteuse de chrominance résultant du système NTSC ;
dans lequel ledit système de conversion du système (7a) convertit le signal de sous-porteuse de chrominance du système NTSC sorti dudit moyen de conversion de la fréquence (4) en un signal de sous-porteuse de chrominance du système PAL par l'utilisation d'un signal d'oscillation qui est sélectionné par un commutateur (SW14) pour passer de manière répétée alternativement à l'un d'un signal ayant une fréquence de fsc/2 et d'un signal ayant une fréquence de 3fsc/2, qui sont extraits d'un signal d'oscillation ayant une fréquence fsc du signal de sous-porteuse de chrominance du système PAL sorti d'un oscillateur (27), aux cadencements d'un signal de commutation pour sélectionner le signal d'oscillation par ledit commutateur (SW14) ayant une fréquence de fH/2, et délivre un signal de sous-porteuse de chrominance résultant.

2. Lecteur de cassettes vidéo du système PAL comme revendiqué dans la revendication 1,
dans lequel ledit circuit de l'oscillateur local (6a) comprend :
un oscillateur du type commandé en tension (12a) pour osciller à l'intérieur d'une plage de fréquences d'oscillation prédéterminée pour générer un signal d'oscillation locale et pour délivrer le signal d'oscillation locale ;
un moyen de soustraction de fréquence (15) pour soustraire une fréquence d'un signal de soustraction entré, de la fréquence du signal d'oscillation locale sorti dudit oscillateur du type commandé en tension (12a) ou d'une fréquence obtenue en divisant la fréquence du signal d'oscillation locale par un troisième rapport de division de fréquence prédéterminé, et pour délivrer un signal ayant une fréquence du résultat de la soustraction ;
un premier moyen de division de fréquence (16) pour diviser la fréquence du signal sorti dudit moyen de soustraction de fréquence (15) par un premier rapport de division de fréquence prédéterminé, et pour délivrer un signal obtenu après la division de fréquence ;
un oscillateur à quartz (27a, 27b) pour générer un signal d'oscillation ayant la fréquence de la sous-porteuse du signal de sous-porteuse de chrominance du système PAL, et pour délivrer le signal d'oscillation ;
un circuit de conversion de fréquence (17, 18) pour exécuter une conversion de fréquence de telle sorte que la fréquence du signal sorti dudit premier moyen de division de fréquence (16) est changée par la fréquence du signal d'oscillation sorti dudit oscillateur à quartz (27a, 27b) ou par une fréquence obtenue en divisant le signal d'oscillation sorti dudit oscillateur à quartz (27a, 27b) par un quatrième rapport de division de fréquence prédéterminé et pour délivrer un signal obtenu après la conversion de fréquence;
un second moyen de division de fréquence (14) pour diviser la fréquence du signal sorti dudit moyen de conversion de fréquence (17, 18) par un second rapport de division de fréquence prédéterminé, et pour délivrer un signal obtenu après la division de fréquence comme étant ledit signal de soustraction au dit moyen de soustraction de fréquence (15) ;
un comparateur de phase (26a) pour comparer le signal d'oscillation sorti dudit oscillateur à quartz (27a, 27b) avec le signal sorti dudit moyen de conversion de fréquence (4), et pour délivrer un signal d'erreur de phase résultant au dit oscillateur du type commandé en tension (12a) ; et
un circuit de verrouillage sur fréquence latérale (22) pour détecter la fréquence d'oscillation dudit oscillateur du type commandé en tension (12a) en comptant le signal provenant dudit circuit de conversion de fréquence (17) sur la base d'un signal de synchronisation horizontale entré, et pour commander la fréquence d'oscillation dudit oscillateur commandé en tension (12a) à l'intérieur d'une plage de fréquences prédéterminée.
